# FASCICULE DE BREVET EUROPEEN

(11) **EP 2 771 970 B1**
(45) Date de publication et mention de la délivrance du brevet: **26.12.2018**
(21) Numéro de dépôt: 12773348.3
(22) Date de dépôt: 22.10.2012
(51) Int. Cl.: H02P 3/12, B60S 1/08

(54) **COMMANDE DE DECONNEXION RAPIDE**
SCHNELL TRENNBARE STEUERUNG
QUICK DISCONNECT CONTROL

(30) Priorité: 24.10.2011 FR 1159632
(43) Date de publication de la demande: 03.09.2014
(73) Titulaire: Valeo Systèmes d'Essuyage, 78322 Le Mesnil Saint Denis (FR)
(72) Inventeur: FLOQUET, Frédéric, 86270 Coussay-Les-Bois (FR)
(86) Numéro de dépôt international: PCT/EP2012/070889
(87) Numéro de publication internationale: WO 2013/060652

(56) Documents cités:
- DE-A1- 2 726 810
- DE-A1- 10 259 732
- US-A- 4 581 542
- US-A- 5 142 433

## Description

L'invention concerne un dispositif de commande de connexion/déconnexion de l'alimentation d'un moteur d'essuie-glaces de véhicule automobile.

À l'heure actuelle, les moteurs d'essuie-glaces de véhicules automobiles sont alimentés à partir d'une tension d'alimentation continue, de l'ordre de 12 V, par l'intermédiaire d'un commutateur d'alimentation, noté HSS pour High Side Switch en anglais.

Lors de la coupure de l'alimentation moteur, le moteur d'essuie-glaces étant en fonctionnement, il apparaît une tension de coupure en raison du fonctionnement du moteur d'essuie-glaces en générateur, lors de cette coupure, du fait de la présence de l'aimant permanent équipant ce type de moteur et son inertie. Cette tension de commutation, bien que décroissante, est toutefois présente sur un temps de décroissance de 200 ms environ.

L'existence d'une telle tension de commutation d'amplitude transitoire, de l'ordre de 12 volts, est néfaste au bon fonctionnement des circuits électriques du véhicule, en raison du caractère transitoire de cette tension de commutation et de l'inadéquation de son existence vis à vis des critères de compatibilité électromagnétique.

Le brevet US 5 142 433 décrit un dispositif de commande de moteur à courant continu présentant une structure de pont en H comportant deux transistors bipolaires complémentaires, PNP et NPN, le transistor PNP étant activé pour alimenter le moteur, le transistor NPN étant bloqué, et, réciproquement, le transistor PNP étant bloqué et le transistor NPN étant activé pour couper l'alimentation du moteur.

Une telle structure et un tel mode opératoire, par conduction alternée de chacun des transistors précités, permettent de freiner la rotation moteur et de réduire les tensions de commutation transitoire.

Elle présente toutefois l'inconvénient de nécessiter le doublement des composants de commutation, ce qui augmente en conséquence les coûts de fabrication.

Le document US4581542 divulgue un dispositif de commande de connexion/déconnexion de l'alimentation approprié, qui comporte au moins un circuit de commutation de déconnexion rapide inséré entre la borne de la ligne délivrant la tension d'alimentation moteur et la borne du commutateur d'alimentation moteur, ledit circuit de commutation de déconnexion rapide étant constitué par un transistor de commutation commandé piloté par un signal de signalisation de fonctionnement moteur.

En particulier, un objet de la présente invention est la mise en oeuvre d'un dispositif de commande de connexion/déconnexion de l'alimentation d'un moteur d'essuie-glaces de véhicule automobile, grâce auquel, lors d'une déconnexion du moteur d'essuie-glaces, l'amplitude de la tension de commutation est rendue inférieur à 1 volt et le temps de décroissance est rendu inférieur à 10 ms.

Le dispositif de commande de connexion/déconnexion de l'alimentation d'un moteur d'essuie-glaces de véhicule automobile, objet de l'invention, est remarquable en ce qu'il comporte au moins un circuit de commutation de déconnexion rapide inséré entre la borne de la ligne délivrant la tension d'alimentation moteur et la borne du commutateur d'alimentation moteur.

Le dispositif de commande de connexion/déconnexion de l'alimentation d'un moteur d'essuie-glaces de véhicule automobile, objet de l'invention, est également remarquable en ce que le circuit de commutation de déconnexion rapide est constitué par un transistor de commutation commandé, piloté par un signal de signalisation de fonctionnement moteur.

Le dispositif de commande de connexion/déconnexion de l'alimentation d'un moteur d'essuie-glaces de véhicule automobile, objet de l'invention, est également remarquable en ce qu'il comporte en outre un interrupteur de commande du signal de signalisation fonctionnement moteur, cet interrupteur de commande étant lui-même piloté par un signal de présence de la tension d'alimentation moteur sur la borne de la ligne délivrant la tension d'alimentation moteur.

Le dispositif de commande de connexion/déconnexion de l'alimentation d'un moteur d'essuie-glaces de véhicule automobile, objet de l'invention, est également remarquable en ce que le transistor de commutation commandé est un transistor à effet de champ de type PMOS.

Le dispositif de commande de connexion/déconnexion de l'alimentation d'un moteur d'essuie-glaces de véhicule automobile, objet de l'invention, est également remarquable en ce que le circuit de commutation de déconnexion rapide est constitué par un relais électromécanique commandé, piloté par un signal de signalisation de fonctionnement moteur.

Il trouve application à la construction et à l'équipement de véhicules automobiles de tout type.

Il sera mieux compris à la lecture et à l'observation des dessins ci-après dans lesquels :
- la figure 1 représente, à titre illustratif, le schéma fonctionnel d'un dispositif de commande de connexion/déconnexion de l'alimentation d'un moteur d'essuie-glaces de véhicule automobile, conforme à l'objet de la présente invention ;
- la figure 2a représente, à titre illustratif, un détail de mise en oeuvre du dispositif objet de l'invention représenté en figure 1,en particulier du circuit de commutation de déconnexion rapide, dans un mode de réalisation préférentiel non limitatif ;
- la figure 2b représente, à titre illustratif, un détail de mise en oeuvre du dispositif de commande de connexion déconnexion de l'alimentation d'un moteur d'essuie- glaces de véhicule automobile, conforme à l'objet de la présente invention représenté en figure 1, en particulier du commutateur d'alimentation moteur HSS ;
- la figure 3 représente, à titre illustratif, un chronogramme des signaux de tension d'alimentation aux bornes moteur d'essuie-glaces, en l'absence (A) du dispositif de commande de connexion/déconnexion objet de l'invention, en présence (B) du dispositif de commande de connexion/déconnexion objet de l'invention et un chronogramme du courant d'alimentation moteur (C), lors d'une déconnexion en présence du dispositif de commande de connexion/déconnexion objet de l'invention.

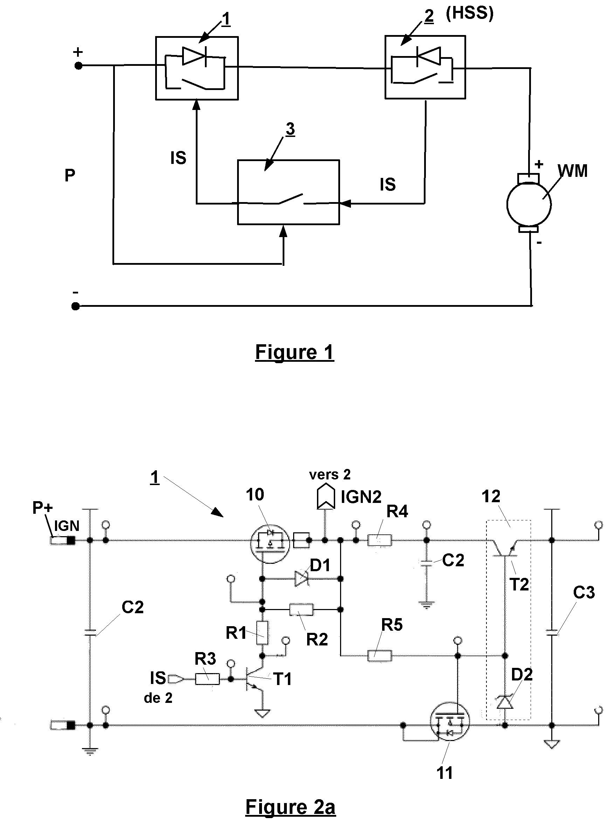

Le dispositif de commande de connexion/déconnexion de l'alimentation d'un moteur d'essuie-glaces de véhicule automobile, objet de la présente invention, sera maintenant décrit en liaison avec la figure 1 et les figures suivantes.

En référence à la figure précitée, le dispositif objet de l'invention comprend un circuit de commutation de déconnexion rapide, noté 1, inséré entre la borne de la ligne délivrant la tension d'alimentation moteur, notée P+, et la borne du commutateur d'alimentation moteur, HSS, portant la référence 2. Bien entendu, ainsi que représenté sur la figure 1 précitée, la borne de sortie du commutateur d'alimentation moteur 2 est connectée à la borne d'alimentation du moteur d'essuie-glaces, noté WM, moteur à courant continu recevant la tension d'alimentation de puissance P +,-, lors du fonctionnement du moteur d'essuie-glaces commandé par l'utilisateur.

De préférence, le circuit de commutation de déconnexion rapide 1 est constitué par un transistor de commutation commandé piloté par un signal de signalisation fonctionnement moteur IS, ce signal étant délivré par le commutateur d'alimentation moteur HSS, 2. Ce commutateur HSS peut avantageusement être constitué par un circuit intégré disponible dans le commerce comportant une borne de sortie délivrant le signal de signalisation fonctionnement moteur IS précité.

De préférence, mais de manière non limitative, le dispositif de commande de connexion/déconnexion de l'alimentation d'un moteur d'essuie-glaces de véhicule automobile, tel que représenté en figure 1, comporte avantageusement un interrupteur 3 de commande du signal de signalisation fonctionnement moteur IS. L'interrupteur de commande précité 3 est lui-même piloté par un signal de présence de la tension d'alimentation moteur P+ sur la borne de la ligne délivrant la tension d'alimentation moteur.

Sur actionnement de la commande de la fonction essuie-glaces par l'utilisateur, on comprend que la tension d'alimentation de puissance P est délivrée aux bornes de la ligne délivrant la tension d'alimentation moteur, et, en conséquence cette dernière peut être délivrée pendant toute l'opération de la fonction essuie-glaces par le circuit 1 de commutation de déconnexion rapide opérant sensiblement comme un élément semi-conducteur à l'état passant, délivrant ce même signal au circuit HSS,2, puis au moteur d'essuie-glaces WM. Le signal de signalisation fonctionnement moteur IS est alors délivré par l'interrupteur de commande 3 commandé à l'état fermé par la tension d'alimentation de puissance P, le circuit de commutation de déconnexion rapide 1 étant maintenu à l'état passant pendant toute la durée d'exécution de la fonction essuie-glaces. L'ensemble constitué par le circuit 1 de commutation de déconnexion rapide et par l'interrupteur de commande 3 constitue en fait un circuit de contre réaction de commande à la connexion/déconnexion.

Sur commande de fin de la fonction d'essuie-glaces par l'utilisateur, l'interrupteur de commande 3 est commandé à l'ouverture et le signal de signalisation fonctionnement moteur IS est également coupé, ce qui provoque l'ouverture immédiate du circuit de commutation de déconnexion rapide 1.

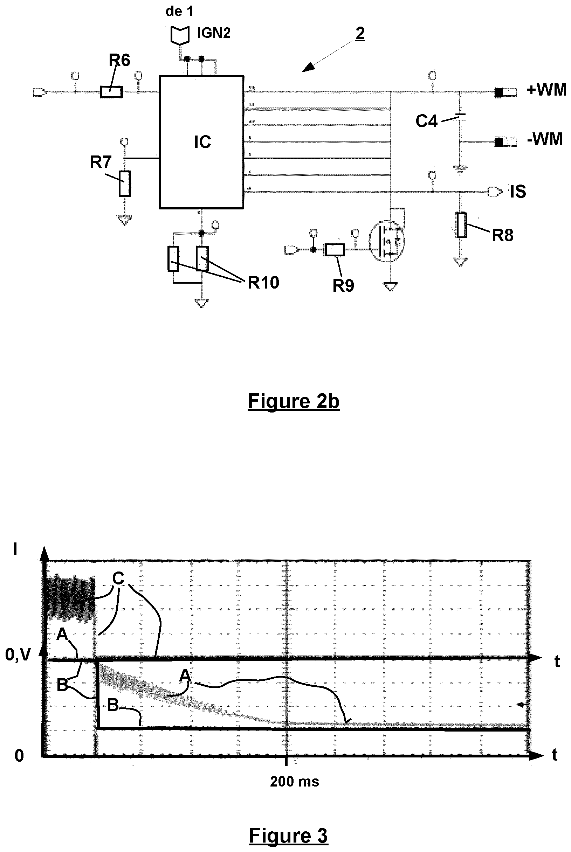

Le mode opératoire du dispositif de commande de connexion/déconnexion de l'alimentation d'un moteur d'essuie-glaces de véhicule automobile conforme à l'objet de la présente invention, tel que représenté en figure 1, permet, sur déconnexion rapide par le circuit de commutation de déconnexion rapide 1, de supprimer sensiblement toute tension parasite engendrée par le moteur d'essuie-glaces WM fonctionnant transitoirement en générateur lors de la coupure de ce dernier. Ce mode opératoire sera explicité plus en détail en liaison avec les figures 2a et 2b ci-après.

Sur la figure 2a on a représenté, à titre d'exemple préférentiel non limitatif, un mode d'exécution spécifique du circuit de commutation de déconnexion rapide 1 de la figure 1.

Sur cette figure, on désigne par IGN le signal correspondant à la tension d'alimentation de puissance P+ de la figure 1.

À l'observation de la figure 2a précitée, on constate que celui-ci comprend un transistor à effet de champ de type PMOS, noté 10, lequel constitue le transistor de commutation commandé du circuit de commutation de déconnexion rapide 1. Le transistor PMOS 10 précité reçoit le signal IGN sur son électrode de source et comporte, connecté à son électrode de grille, un transistor de commutation T1 par l'intermédiaire d'une résistance R1. Le transistor de commutation T1 constitue un transistor en émetteur commun à la masse dont l'électrode de base reçoit le signal de signalisation de fonctionnement moteur IS délivré par l'interrupteur de commande 3. L'électrode de drain du transistor PMOS 10 délivre le signal d'alimentation commandé IGN2 à la borne d'entrée du commutateur d'alimentation moteur HSS, 2. On comprend que la valeur de la tension du signal d'alimentation commandé IGN2 peut avantageusement être stabilisée par une diode Zenner D1 et que les valeurs des résistances R1 à R5 et des capacités C1 à C3 sont adaptées afin de réaliser une polarisation convenable de l'ensemble.

En outre, et de manière avantageuse non limitative, le circuit de commutation de déconnexion rapide 1 peut comporter, par exemple, un deuxième transistor de type NMOS, 11, connecté en série sur la ligne de retour à la tension de masse de l'ensemble du dispositif. Le deuxième transistor de type NMOS 11 permet avantageusement d'isoler l'ensemble du circuit des impulsions négatives d'amplitude élevée susceptibles d'être engendrées par le moteur WM lors de la déconnexion de ce dernier.

Enfin on notera, de manière avantageuse, la présence d'un circuit ballast régulateur de tension portant la référence 12, constitué par un deuxième transistor bipolaireT2 et par une deuxième diode Zenner D2 connectée en série avec l'électrode de base du transistor précité. Le circuit ballast régulateur de tension permet de réguler la tension délivrée aux bornes du circuit ballast 12 à une valeur sensiblement égale à celle de la tension de la diode Zenner D2. Le fonctionnement de ce type de circuit ne sera pas décrit en détail, car il correspond à un montage classique connu de l'homme du métier.

Un exemple de mise en oeuvre non limitatif du commutateur d'alimentation moteur HSS, 2, est maintenant décrit en liaison avec la figure 2b.

Le commutateur d'alimentation moteur 2 peut être mis en oeuvre à partir de tout circuit dédié de ce type, circuit intégré IC comportant, outre la sortie d'alimentation moteur positive +WM, l'alimentation moteur négative -WM étant reliée à la masse de l'ensemble, une sortie du signal de signalisation fonctionnement moteur IS. Le circuit intégré IC comporte une borne d'alimentation recevant le signal de puissance d'alimentation commandé IGN2 délivré par le circuit de commande de commutation de déconnexion rapide 1. Les valeurs de résistance R6 à R10 et la valeur de capacité C4 sont choisies de façon à assurer une polarisation convenable du circuit intégré IC.

La figure 3b représente un chronogramme de la tension délivrée aux bornes du moteur d'essuie-glaces sur le diagramme temporel 0,V,t ,tension V en valeur relative, la courbe A en grisé représentant l'évolution de cette tension lors d'une coupure de la tension d'alimentation du moteur d'essuie-glaces en l'absence de dispositif de commande de connexion/déconnexion de l'alimentation du moteur d'essuie-glaces conforme à l'objet de la présente invention. Cette situation correspond à celle, sur le schéma de la figure 1, où le circuit de commande de commutation de déconnexion rapide 1 et l'interrupteur de commande 3 sont supprimés, le commutateur d'alimentation moteur HSS, 2, étant directement alimenté par la borne P+. On constate que, sur le chronogramme précité, le temps de décroissance de la tension aux bornes du moteur d'essuie-glaces décroît sur une durée de 200 ms environ.

Au contraire, en présence du circuit de commande de commutation de déconnexion rapide 1 et de l'interrupteur de commande 3, courbe B, la décroissance est très rapide, inférieure à 10 ms.

Le diagramme supérieur 0,I,t, intensité I en valeur relative, représente la variation correspondante du courant délivré, courbe C, lors de la commutation de déconnexion du moteur d'essuie-glaces.

D'une manière plus générale, on indique que le circuit de commutation de déconnexion rapide 1 peut-être constitué par un relais électromécanique commandé. Ce relais est également commandé par le signal de signalisation fonctionnement moteur IS, par l'intermédiaire de l'interrupteur de commande 3 par exemple.

## Revendications

1. Dispositif d'alimentation d'un moteur d'essuie-glaces de véhicule automobile, le dispositif d'alimentation comporte au moins un circuit de commutation de déconnexion rapide (1) inséré entre la borne de la ligne (P+) délivrant la tension d'alimentation moteur et la borne du commutateur (2) d'alimentation moteur, ledit circuit de commutation de déconnexion rapide (1) étant constitué par un transistor de commutation commandé, piloté par un signal (IS) de signalisation de fonctionnement moteur, le transistor de commutation commandé est un transistor (10) à effet de champ de type PMOS.

2. Dispositif selon la revendication1, **caractérisé en ce qu'**il comporte en outre un interrupteur (3) de commande dudit signal (IS) de signalisation fonctionnement moteur, ledit interrupteur (3) de commande étant lui-même piloté par un signal de présence de la tension d'alimentation moteur sur la borne (P+) de la ligne délivrant la tension d'alimentation moteur.

3. Dispositif selon la revendication 1, **caractérisé en ce que** ledit circuit de commutation de déconnexion rapide (1) est constitué par un relais électromécanique commandé, piloté par un signal (IS) de signalisation de fonctionnement moteur.

4. Dispositif selon l'une des revendications précédentes, **caractérisé en ce que** le transistor (10) reçoit un signal IGN correspondant à la tension d'alimentation de puissance (P+) sur son électrode de source et comporte, connecté à son électrode de grille, un transistor de commutation (T1) par l'intermédiaire d'une résistance R1.

5. Dispositif selon l'une des revendications 2 à 4, **caractérisé en ce que** le transistor de commutation (T1) constitue un transistor en émetteur commun à la masse dont l'électrode de base reçoit le signal (IS) de signalisation de fonctionnement moteur délivré par l'interrupteur de commande (3).

6. Dispositif selon l'une des revendications précédentes, **caractérisé en ce que** l'électrode de drain du transistor (10) PMOS délivre un signal d'alimentation commandé (IGN2) à la borne d'entrée du commutateur (2) d'alimentation moteur.

7. Dispositif selon la revendication précédente, **caractérisé en ce que** la tension du signal d'alimentation commandé (IGN2) est stabilisé par une diode Zenner (D1).

8. Dispositif selon l'une des revendications précédentes, **caractérisé en ce que** le circuit de commutation de déconnexion rapide (1) comporte un deuxième transistor (11) de type NMOS connecté en série sur la ligne de retour à la tension de masse de l'ensemble du dispositif.

9. Dispositif selon la revendication précédente, **caractérisé en ce qu'**un circuit ballast régulateur de tension (12) constitué d'un transistor bipolaire (T2) et par une diode Zenner (D2) est connecté en série avec l'électrode de base du transistor (11) de type NMOS.

## Patentansprüche

1. Versorgungsvorrichtung eines Kraftfahrzeug-Scheibenwischermotors, wobei die Versorgungsvorrichtung mindestens eine Schnellabschaltungsschaltung (1) umfasst, die zwischen die Klemme der Leitung (P+), die die Motorversorgungsspannung liefert, und die Klemme des Motorversorgungsschalters (2) eingefügt ist, wobei die Schnellabschaltungsschaltung (1) aus einem gesteuerten Schalttransistor besteht, der von einem Motorbetriebsmeldesignal (IS) gesteuert wird, wobei der gesteuerte Schalttransistor ein Feldeffekttransistor (10) vom PMOS-Typ ist.

2. Vorrichtung nach Anspruch 1, **dadurch gekennzeichnet, dass** sie außerdem einen Steuerschalter (3) des Motorbetriebsmeldesignals (IS) umfasst, wobei der Steuerschalter (3) selbst von einem Signal des Vorhandenseins der Motorversorgungsspannung auf der Klemme (P+) der Leitung, die die Motorversorgungsspannung liefert, gesteuert wird.

3. Vorrichtung nach Anspruch 1, **dadurch gekennzeichnet, dass** die Schnellabschaltungsschaltung (1) aus einem gesteuerten elektromechanischen Relais besteht, das von einem Motorbetriebsmeldesignal (IS) gesteuert ist.

4. Vorrichtung nach einem der vorstehenden Ansprüche, **dadurch gekennzeichnet, dass** der Transistor (10) ein Signal IGN empfängt, das der Leistungsversorgungsspannung (P+) auf seiner Source-Elektrode entspricht und, an seine Gate-Elektrode angeschlossen, einen Schalttransistor (T1) über einen Widerstand R1 umfasst.

5. Vorrichtung nach einem der Ansprüche 2 bis 4, **dadurch gekennzeichnet, dass** der Schalttransistor (T1) einen Transistor in gemeinsamem Sender an der Masse bildet, dessen Basiselektrode das Motorbetriebsmeldesignal (IS), das von dem Steuerschalter (3) geliefert wird, empfängt.

6. Vorrichtung nach einem der vorstehenden Ansprüche, **dadurch gekennzeichnet, dass** die Drain-Elektrode des PMOS-Transistors (10) ein gesteuertes Versorgungssignal (IGN2) an der Eingangsklemme des Motorversorgungsschalters (2) liefert.

7. Vorrichtung nach dem vorstehenden Anspruch, **dadurch gekennzeichnet, dass** die Spannung des gesteuerten Versorgungsignals (IGN2) durch eine Zenerdiode (D1) stabilisiert ist.

8. Vorrichtung nach einem der vorstehenden Ansprüche, **dadurch gekennzeichnet, dass** die Schnellabschaltungsschaltung (1) einen zweiten Transistor (11) vom NMOS-Typ umfasst, der in Serie auf der Rückleitung zu der Massespannung der gesamten Vorrichtung geschaltet ist.

9. Vorrichtung nach dem vorstehenden Anspruch, **dadurch gekennzeichnet, dass** eine Spannungsregelungs-Vorschaltschaltung (12), die aus einem Bipolartransistor (T2) und eine Zenerdiode (D2) besteht, mit der Basiselektrode des Transistors (11) vom NMOS-Typ in Serie geschaltet ist.

## Claims

1. A device for supplying power to a windscreen wiper motor of a motor vehicle, said device for supplying power comprises at least one quick disconnect switching circuit (1) inserted between the terminal of the line (P+) delivering the motor power supply voltage and the terminal of the motor power supply switch (2), said quick disconnect switching circuit (1) consisting of a controlled switching transistor driven by a motor operation indication signal (IS), said controlled switching transistor is a PMOS-type field effect transistor (10).

2. The device as claimed in claim 1, **characterized in that** it also comprises a switch (3) for controlling said motor operation indication signal (IS), said control switch (3) being itself driven by a signal indicating presence of the motor power supply voltage on the terminal (P+) of the line delivering the motor power supply voltage.

3. The device as claimed in claim 1, **characterized in that** said quick disconnect switching circuit (1) consists of a controlled electromechanical relay, driven by a motor operation indication signal (IS).

4. The device according to any one of the preceding claims, **characterized in that** the transistor (10) receives an IGN signal corresponding to the power supply voltage (P+) on its source electrode and comprises, connected to its gate electrode, a switching transistor (T1) via a resistor R1.

5. The device according to any one of Claims 2 to 4, **characterized in that** the switching transistor (T1) constitutes a transistor as common emitter to ground whose base electrode receives the motor operation indication signal (IS) delivered by the control switch (3) .

6. The device according to any one of the preceding claims, **characterized in that** the drain electrode of the PMOS transistor (10) delivers the controlled power supply signal (IGN2) to the input terminal of the motor power supply switch.

7. The device according to the preceding claim, **characterized in that** the controlled power supply signal (IGN2) is stabilized by a Zenner diode (D1).

8. The device according to any one of the preceding claims, **characterized in that** the quick disconnect switching circuit (1) comprises a second NMOS-type transistor (11) connected in series to the ground voltage return line of the device as a whole.

9. The device according to the preceding claim, **characterized in that** a voltage regulator ballast circuit (12) consisting of a bipolar transistor (T2) and a Zenner diode (D2) is connected in series with the base electrode of the NMOS-type transistor (11).
